Europäisches Patentamt

(19) European Patent Office

Office européen des brevets

(11) Publication number: **0 044 953**

**B1**

(12) **EUROPEAN PATENT SPECIFICATION**

(45) Date of publication of patent specification: **03.12.86**

(21) Application number: **81104960.0**

(22) Date of filing: **13.09.79**

(60) Publication number of the earlier application in accordance with Art. 76 EPC: **0 009 211**

(51) Int. Cl.⁴: **G 02 B 6/38**

(54) **Optical fiber alignment mechanism and connectors using the same.**

(30) Priority: **20.09.78 JP 116220/78**
**22.01.79 JP 4728/79**
**22.01.79 JP 4729/79**
**16.04.79 JP 46440/79**
**23.04.79 JP 48930/79**

(43) Date of publication of application:
**03.02.82 Bulletin 82/05**

(45) Publication of the grant of the patent:
**03.12.86 Bulletin 86/49**

(84) Designated Contracting States:
**DE FR GB**

(56) References cited:
**DE-A-2 704 014**
**DE-B-2 363 984**
**FR-A-2 344 853**
**GB-A-1 472 636**
**US-A-4 087 155**
**US-A-4 099 832**

(73) Proprietor: **Nippon Telegraph and Telephone Corporation**
**1-6 Uchisaiwaicho 1-chome Chiyoda-ku Tokyo (JP)**

(72) Inventor: **Murata, Hisashi**
**231-2-113, Miwa 2-chome**
**Mito City Ibaraki Prefecture (JP)**

(74) Representative: **Patentanwälte Wenzel & Kalkoff et al**
**Grubes Allee 26 Postfach 730466**
**D-2000 Hamburg 73 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an optical fibre alignment mechanism and connectors using it.

Optical fibres have been widely known as suitable means for transmitting optical signals in optical communications. In optical fibre communication systems, however, the loss of optical energy has always been a subject of discussion. When light is transmitted through optical fibres, there is caused not only transmission loss due to the fibre characteristics but also connecting loss due to the fibre interconnections. This invention aims at elimination of the latter loss. In order to eliminate or minimize such connecting loss, fibre alignment has to be achieved with accuracy of micrometer order, and at the same time, one fibre end has to closely abut on the other opposite thereto. Further, optical fibres are usually thin lines having a diameter of 100 micrometers order, so that the fibres themselves are fragile and their ends can be even more fragile. Accordingly, fibre ends have to be provided with the structure that is suitable for protecting and reinforcing them. In order to attain a fine fibre alignment mechanism there have been made a lot of trials. However, they have not always been successful in giving an entire solution of the problem.

In a known popular structure a plug is formed by moulding ("Nachrichtentechnik Elektronik", No. 8, 1979, Berlin; M. Kaiser "Optische Stecker", p. 95, chapter 4.5). The fibre is inserted in a casting mould, and the plug body is formed by filling up the casting with a stiffening mass, e.g., an epoxy resin. However, it is a well known fact that the moulding plastic when stiffening tends to shrink. Due to this shrinkage any fine adjustment of the fibre alignment before moulding the plastic will be in vain. Apart from this, possible tolerances or variations by the casting become effective. Accordingly, it is hardly possible to achieve an accurate fibre alignment by such a simple moulding method.

The following plugs or connectors of the prior art use rods for aligning an optical fibre by a three-elements set of cylindrical rods, each rod of the three elements set having two generatrices in contact with its two adjacent rods, while one generatrix is in contact with the introduced optical fibre.

According to FR—A1—2 334 853 a connecting plug for an optical cable comprises a bushing and a bunch of cylindrical rods arranged inside the bushing, the bunch including at least one three-elements set of cylindrical rods. A bonding material is introduced into the bushing for securing the bushing to the rods and the optical fibre. The disadvantage consists especially in assembling one bushing for each plug body. This bushing has to meet very accurate and special conditions of manufacture. Thus, the cylindrical bushing is defined by the outer lateral wall and the inner lateral wall coaxial therewith. The diameter of the inner wall is a function of a diameter of the rods. The external wall of the bushing serves as a reference for the fibre axis position for establishing the connection. The bushing requires an accurate internal wall and a precision machineable material. The fibre alignment would be impossible if the bushing were deformed by some cause. At all events, the alignment and the connection are dependent on the quality of the outer surface of the bushing and its material.

According to US—A—4 109 994 a pair of optical fibre terminations abut in a V-groove. Each termination comprises a set of more than three cylinders closely packed side by side to provide a plurality of interstitial apertures therebetween into which single fibres are individually inserted. The whole assembly is secured, e.g., by potting which, however, is not shown or described. At all events, the potting is to be performed after the whole assembly is clamped tight. Consequently, the potting comprises a troublesome method of working which is aimed only to secure the cylinders and the fibre. By this form of construction the fibres can be inserted while the cylinders are still loose, thus allowing the interstitial spaces to be enlarged at will by displacement of the cylinders. Therefore it is not possible to achieve a well-defined contour or circumference of the termination by carrying out said clamping.

Furthermore, there are known connectors with three inner rods and at least three outer rods, the outer rods being covered with a resilient sleeve into which connector means are to be axially inserted (US—A—4 123 139, US—A—4 099 832). The inner rods extend parallelly and in mutual contact with one another, thereby forming a tricuspid aperture therebetween. An optical fibre is disposed within the aperture and secured to the inner rods. The mutual contact of the three inner rods with one another can be achieved by inserting an adhesive, such as silicon rubber, into the spaces of the aperture not occupied by the fibre. To achieve the strictly parallel alignment of the three inner rods to each other and their mutual contact it is known to use a jig (US—A—4 099 832). Within the jig the fibres are forced into place. The entire assembly is baked to cure an inserted epoxy. To prevent an abrupt bend or kink where the fibres enters the inner rods, the epoxy bonding the inner rods is used to form an anchor towards the back of the half-connector. Then several layers of heat-shrinkable tubing are applied, as required, to form a handle and to provide strain relief. This method of epoxying the fibre firmly to the inner rods results in a troublesome manufacturing of the half-connector. Furthermore, there is finally a protective coating of silicone rubber compound placed over the ends of both the fibre and the inner rods. The silicon has to act as a buffer and a seal. So it may become difficult to insert the inner rods into a tricuspid interstice formed between the outer rod group. Still further, tagential contact between the inner rods in the interstice may be broken by external force added thereto. Moreover, when some twisting force is applied thereto, the fibre location in the inner rods may be changed thereby. A stable and durable connection against repetition of mating and detaching the connector is not securely provided. At all events, the connector has to comprise outer rods in order to receive and to guide the inner rods, the outer rods being elastically mounted. Thus, the construction is voluminous and susceptible to unintentional deformation. The nesting of the inner rods within the outer rods results in an expensive optical fibre connector.

Finally, in a connector disclosed in an article entitled "Dual three-rod Connector For Single Fiber Optics" by B. D. Metcalf et al, published in Applied Optics Vol 18, No. 3, page 400—401, of February 1, 1979, there are used two sets of rigid rods. One set comprises three rods having identical diameters and the other one also comprises three rods having an identical diameter but smaller than that of the first set.

In the first rod group, said three rods are arranged to have a tricuspid interstice formed therebetween, into which an optical fibre is inserted to be fixed therein. A part of the resultant structure is then further inserted into an insert ferrule by a predetermined length and fixed up therein to form a plug, with said three rods coming to work as insert rods. On the one hand, a plurality of the larger diameter rods are arranged, for example, to form a hexagonal cross sectional pattern by using seven rods, and then fixed by binding them together by means of O-rings. Such pattern creates six interstices therein, and each of them is used as a receptacle for the insert rods of the plug. In other words, the fibre alignment has to be made eventually within the interstice formed by the larger diameter rods. As a result, the fibre alignment comes to be dominated by the interstice state which considerably depends on the compression mode by said O-rings or the like. Also, the heads of the insert rods are not held together, thereby making it harder to insert them into said interstices. Furthermore, the tangential contact between the rods in the interstice can easily be broken by external force abnormally added thereto, and when some type of twisting force is applied thereto, the fibre location in the insert rods will easily be changed undesirably.

The object of the present invention is to provide an optical fibre alignment mechanism including a plug, the front portion of which forms a plug body having an outer surface defining contact areas for engagement with sleeve and socket means receiving the plug body, an optical fibre arrangement including at least one optical fibre, and fibre alignment means comprising an arrangement only composed of rigid rods of circular cross section, of which at least three are provided, which rods are arranged to surround the optical fibres and each of which is in tangential contact with at least one of the optical fibres as well as with two other of said rods, for allowing the precise connection of optical fibres for use in optical communication systems; and a connector utilizing two fibre connecting plugs, each utilizing such alignment mechanism, by which accurate optical fibre alignment and connection are attained with minimized optical connecting energy loss, the method of manufacturing becomes simple and economical, the number of elements is decreased and the connection becomes stable and durable against wear even in the case of frequent repetition of mating and detaching the connector.

According to the present invention this problem is solved in that said plug is a moulded plug of a pourable and stiffening plastic resin forming a plastic member defining the general contour of the plug including the plug body, the outer surface of which plastic member substantially encloses in lump the fibre arrangement and the rigid rods, but nevertheless allows the rigid rods to be exposed to a limited extent at least at three portions on the plug body, at least part of these limited exposed portions defining said contact areas of the plug body.

Such a molded plug provides a one-piece connector element without using a bushing, a tube, a plug sleeve or anything similar. Each of the at least three rigid rods makes a tangential contact against the outer surface of the plug. These tangential contact lines become slightly exposed when the resin poured into a mould or casting shrinks during its stiffening, the effective diameter, resp. the effective outer guide surface of the plug thus being free due to resin shrinkage. Therefore, the plug can stand frequent repetition of mating with and detaching from the connector without inviting decrease of alignment accuracy and without spoiling stable connection. Although the general shape of the plug body is defined by the plastic member moulded to contain fibre and rigid rods in lump, the outer surface of the plastic member is in tangential contact with the rigid rods so that the effective outer surface of the plug has a very stable diameter formed by the tangential contact lines between the rigid rods and the circumscribed surface. Therefore, the fibre axis and the effective plug centre axis can be coincided with each other regardless of plastic resin shrinkage due to the manufacturing process. It is very easy to mould the plug in a mould cavity. Firstly, the rigid rods are placed in the cavity of the mould, and then the fibre is inserted. Thereafter a melting plastic resin is poured into the portions of the mould. When the resin poured is completely stiffened, the moulded plug is removed out of the mould. Thus the moulding process becomes much easier. Due to the moulded plug means constituted by the plastic member which contains in lump at least one fibre and rigid rods the receiving of the two plug means may be achieved in a very suitable manner when using a receptacle of the afore described structure.

According to another aspect of the invention there is provided an optical fibre alignment mechanism comprising a plurality of optical fibres, a plurality of rigid rods surrounding each of said fibres, and a plastic member formed in a plug like shape to contain in lump the fibres and rigid rods, the rigid rods being arranged in a plurality of axially extending layers and in tangential contact with neighbour rods, each of the fibres running through the interstice formed by adjoining three rigid rods and being in tangential contact therewith, and each rigid rod belonging to the peripheral side layers of the rigid rods being in tangential contact with the outer surface of the plastic member resp. plug body.

According to a further aspect of the present invention there is provided an optical fibre alignment mechanism comprising at least an optical fibre and three rods surrounding said fibre, the rods being in tangential contact with the fibre in a known per se manner as well as with each other; and each of the rods being tangentially exposed out of the side surface of the plug body resp. the plastic member.

According to another aspect of the present invention, there is provided an optical fibre alignment mechanism in which the plastic member formed in a plug like shape contains in lump a plurality of optical fibres and a plurality of rigid rods surrounding each of the fibres, said rigid rods being arranged such that one of the rods is positioned at centre and the remaining rods are annularly positioned around the centre rigid rod, the latter being in tangential contact with all of the surrounding rigid rods, each of which is also in tangential contact with rigid rods on both its sides, each of said fibres being surrounded by the centre rod and adjoining two of the annularly arranged rigid rods, and each of the annularly arranged rigid rods being in tangential contact with the outer surface of the plastic member resp. plug body.

According to yet another aspect of the present invention, there is provided an optical fibre alignment mechanism in which a plastic portion across two adjacent rods is removed to form a key way which is adapted to restrict the axial revolution of the mechanism.

According to a still further aspect of the invention, there is provided a connector comprising two optical fibre alignment mechanisms of the type described hereinbefore and a receptacle which comprises a resilient sleeve for receiving said two mechanisms from both of its ends, respectively, a housing for containing the sleeve, and means for determining the position of the sleeve in the housing.

According to another aspect of the present inventions, the rigid rods may be in contact with the end face of the plug body resp. of the plastic member and tangentially exposed on it, the material of the rigid rods being harder than at least the material of the optical fibre, so that after a polishing process the optical fibre end is located at the inside a little offset from the rigid rod surface exposed at the frontal end face.

Summarizing the above, dominant advantages of the invention reside in that a plastic member is formed for composing a rigid rod arrangement, so that the dimensional requirement for the plastic member is not particularly important for aligning, the alignment of two fibre sets is very accurate and the whole construction of the connector is very simple because the plug means may be formed by a low number of constructive elements for the connector and by reducing the accuracy of, for instance, the sleeve of the connector so that the connector is simply constructed and at low cost. Generally, the plastic material shrinks when it hardens. Consequently, the outer surface of the plastic allows the rigid rods to become partially exposed. Thus, the effective outer diameter of the plug operating with respect to accurate aligning of two plug means comes to be determined by the arrangement of precision rigid rods. Apart from this, the rigid rods provide accurate mounting of the fibre and they are effective with respect to the blocking of force within the plug. The use of rigid rods ensures mechanical strength of the plug to a great extent whereby the connector may be miniaturized. Rigid rods of high accuracy of 0.5—0.2 um are readily and economically obtainable to reduce the total cost of the device. The moulded plug is adapted to be formed by a plurality of multi-fibre constructions comprising either a centre rigid rod and surrounding rods or a plurality of layers of rigid rods. Furthermore, the moulded plug construction allows the integration of key ways or using rigid rods as key-projections to restrict the angular position of the plug about its axis. When using optical fibres having a diameter of 0.15 mm, rods having a diameter of about 1 mm may be used.

Other and further objects, features and advantages of the present invention will be more fully understood from the description taken in conjunction with accompanying drawings, wherein:

Fig. 1 is a perspective fragmentary sectional view of an optical fibre alignment mechanism and the connector utilizing it according to the present invention;

Fig. 2 is a perspective view of a plug body as shown in Fig. 1;

Figs. 3A, 3B and 3C are diagrammatical representations for explaining the process of manufacturing the plug as shown in Fig. 2;

Fig. 4 is a cross sectional view of a plug modified from that of Fig. 2;

Fig. 5 is a cross sectional view of a modified plug containing a plurality of optical fibres and rigid rod members;

Figs. 6A, 6B and 7 are diagrammatical representations for showing another modified plug which contains a plurality of rigid rod members and optical fibres, and is provided with means for limiting its angular position against the connector;

Fig. 8 is a diagrammatical representation for showing a further modification of a plug;

Figs. 9, 10 and 11 are diagrammatical representations of plugs having a key way;

Fig. 12 is a perspective view of a connector sleeve that is coupled with a plug as shown in Fig. 11;

Fig. 13 is a perspective fragmentary sectional view of two plugs with a key way as shown in Fig. 11 being coupled with the connector with the sleeve as shown in Fig. 12;

Fig. 14 is a cross sectional representation for showing the coupling state in Fig. 13;

Fig. 15 is a cross sectional representation for showing the coupling state of a plug and a connector modified from Fig. 14;

Fig. 16 is a cross sectional representation for showing the coupling state of a further modified connector and a plug having two key ways; and

Fig. 17 is a longitudinal cross sectional view of a modified optical fibre end structure which is applicable to each embodiment as mentioned above.

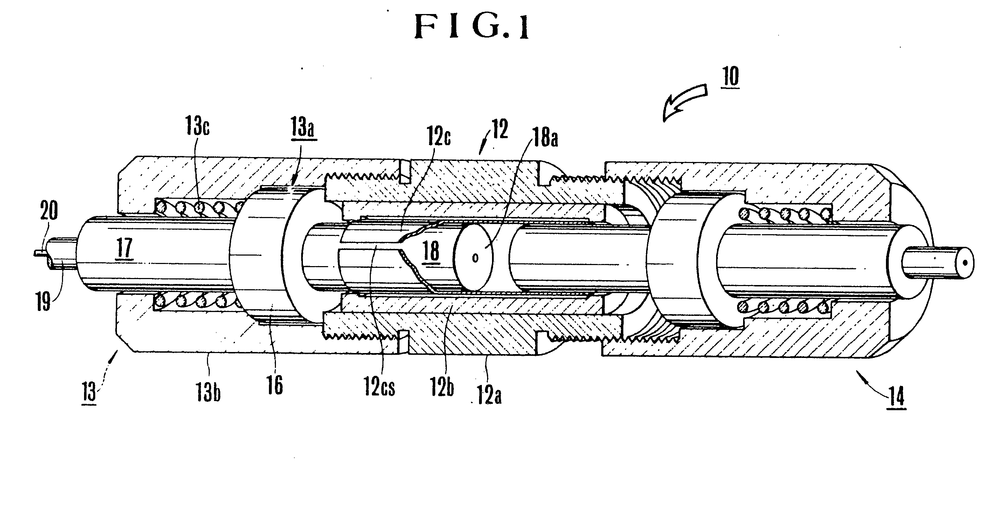

Fig. 1 is a perspective fragmentary sectional view of the optical fibre alignment mechanism according to the invention and the connector utilizing it, especially the connector and plug combination for a single optical fibre. According to this embodiment, a connector 10 comprises a main connector body 12 and plug means 13 and 14 which are inserted into the connector body 12 from opposite ends thereof. The connector body 12 consists of a cylindrical housing 12a, spacer or sleeve holder 12b contained in said housing 12a, and a slitted sleeve 12c which is held within the sleeve holder 12b. Both ends of said housing 12a are provided on their side surface with a thread portion for coupling to the plug means 13 and 14. Said sleeve 12c is formed of resilient material showing spring action such as phosphor bronze, and is provided with a slit 12cs which is formed in its axial direction. Owing to the existence of said slit 12cs as well as the elasticity of the material, the sleeve 12c is able to grasp the plug means 13 and 14 inserted thereinto firmly.

The plug means 13 and 14 have an entirely identical structure, so that the following description will be made only with respect to the plug means 13.

The plug means 13 comprise a moulded plug 13a, a housing 13b containing the plug 13a, and a spring 13c which is housed in the housing 13b and provides a biasing force to the plug 13a so as to push it always toward the centre of the connector 10. The moulded plug 13a comprises a base 16 located at about its centre, a guide cylinder 17 which extends in one direction from one side of the base 16 to project out of the housing 13b, and a cylindrical plug body (hereinafter merely called plug) 18 which extends in the opposite direction from the other side of the base 16 and is to be inserted into the sleeve 12c. Said base 16, guide cylinder 17, and plug 18 are moulded in lump to form the entirety of the moulded plug 13a. A jacket 19 is inserted into the guide cylinder 17 from its one end to cover an optical fibre 20. The tip of the inserted jacket reaches the base 16. The optical fibre 20 is further extended up to the end face of the plug 18. In this case, the optical fibre 20 is aligned on the axis of the moulded plug 13a by an arrangement as explained later, where rigid precision rod members are adjoiningly disposed to surround the fibre 20. Thus the end of the fibre always comes to appear at the centre of a circular plug end 18a.

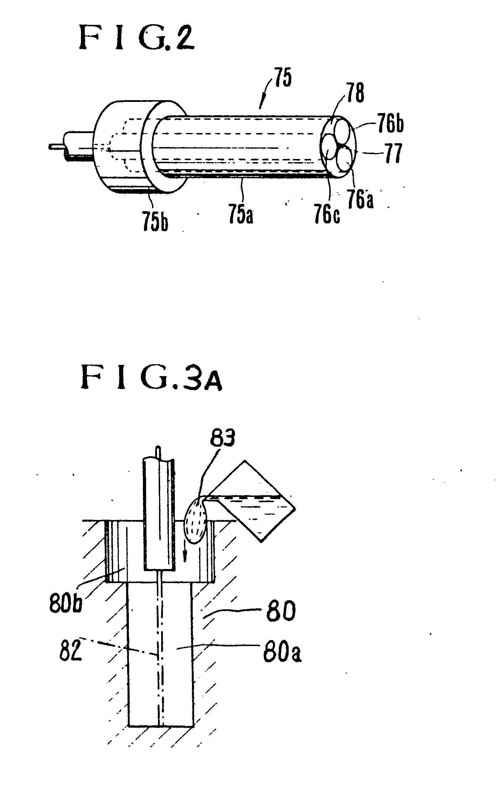

Fig. 2 is a diagrammatical representation to show the structure of the plug 18 of Fig. 1 in greater detail. As shown in the figure, a plug 75 comprises three cylinder rods 76a, 76b and 76c, an optical fibre 77 running through the tricuspid interstice formed by said rods and a plastic member 78 moulded to contain in lump said rods, fibre and a base portion 75b. The plastic member 78 generally defines the contour of the plug body. In the plug, the rods 76a—c are in tangential contact with each other and also with the fibre 77 running through said interstice. Further, each of the rods makes a tangential contact against an outer surface 75a of the plug 75. These tangential contact lines become slightly exposed when the resin poured shrinks during its stiffening, the effective diameter of the plug thus being independent of resin shrinkage. The rods may be made of steel, high quality glass, industrial ruby or sapphire etc., and are precise right cylinders. Therefore, when a plurality of rods of identical length are bound together, the resultant structure comes to have an end face entirely perpendicular to its side surface, thus attaining an excellent fibre location as well as an abutment between two plugs as constructed above.

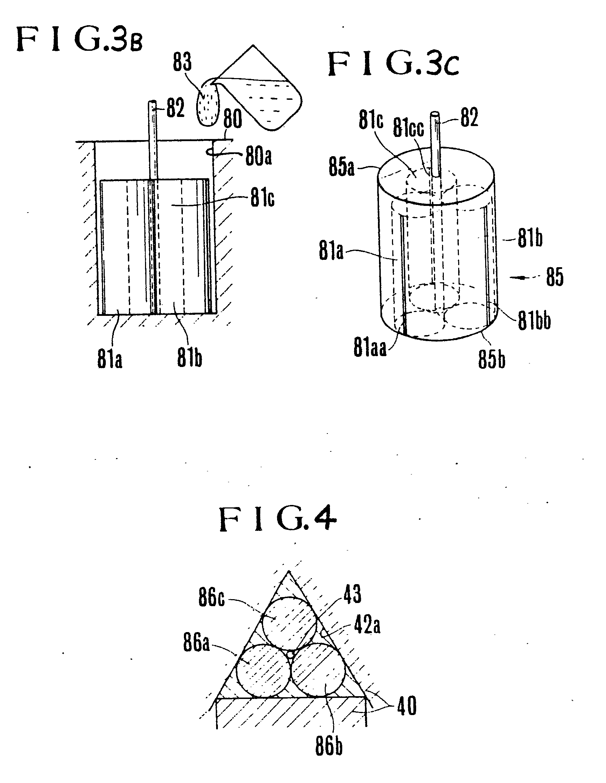

The method of manufacturing the plug utilizing rods with an identical dimension will now be described by referring to Figs. 3A, 3B and 3C. In these figures, the guide cylinder 17 of Fig. 1 has been omitted in order to simplify the explanation. Also for further simplification of the explanation, the manufacturing steps will be described in terms of the single-fibre plug structure.

A mould 80 which has a form accurately corresponding to the outer dimension of a plug to be manufactured is prepared. The mould 80 comprises two portions. One is a deeper cylinder portion 80a which defines the outer surface of the plug, and the other one is a cylinder portion 80b which is shallower, but has a larger diameter than the cylinder 80a. The cylinder 80a is processed to have an accurate inner diameter of, for instance, 2.155 times the rod diameter arranged therein. The base portion of the plug means is not shown in order to simplify the explanation.

Identical cylindrical rods 81a, 81b and 81c are placed in the cylindrical cavity 80a of the mould 80. In this state, three rods 81a, 81b, 81c are kept in tangential contact with one another, and each rod is also kept in tangential contact with the inner wall of the mould cavity or at least kept very close to it. Of course, the rods used in this process are to be right cylinders, each of them having a precisely processed end perpendicular to its axis. Then, an optical fibre 82 is inserted into the tricuspid interstice formed between rods until it reaches the bottom of said mould cavity. The inserted fibre is kept correctly vertical within the interstice against the cavity bottom. Then, a melting plastic resin 83 is poured into the mould while keeping the mould cavity bottom entirely horizontal. When the plastic resin stiffens, the rods and fibre are fixed together in lump. In case the plastic resin should shrink during its stiffening, the force caused by shrinkage would be blocked by the rigid rods. Therefore, less force would reach the fibre. After stiffening of the resin the moulded plug is removed from the mould 80. The result is a plug 85 as shown in Fig. 3C. In this figure, as mentioned above, the base portion 75b is not shown. The plug body 85 has a surface 85a of which a cross section is about a circumscribed circle and tangential contact portions 81aa, 81bb and 81cc between said surface 85a and rods 81a, 81b and 81c come to be exposed a little on said surface 85a. The end face 85b of the plug 85 may be finished by polishing or buffing, if necessary, in order to obtain a flat face perpendicular to the plug axis. As explained before, the plastic moulded portion is not always stable with respect to its dimensional accuracy. However, the overall diameter of the structure using rigid rods made of hard materials such as steel, glass, etc. is kept entirely stable, because the effective outer surface of the plug has a very stable diameter including tangential contact lines between the rods and the surface 75a. Therefore, the fibre axis and the effective plug centre axis will coincide with each other regardless of the plastic resin shrinkage. Accordingly, when two plugs as constructed above are mated within the connector as shown in Fig. 1, their axes are aligned precisely with respect to each other with the help of tangential lines 81aa, 81bb and 81cc. In other words, the contact between the connector sleeve and the plug is made only through said three tangential lines, which are on rigid rods of hard material, for instance, steel or glass. Therefore, the plug can stand repetition of mating with and detaching from the connector without inviting any decrease of the alignment accuracy and spoiling the stable connection. Further, the use of three rigid rods improves the mechanical strength of the plug to a great extent, the connector thus being miniaturized.

In the triple rod arrangement as explained above, the optical fibre 82 runs through the central tricuspid interstice of the triple-rod set. This means that the fibre 82 is located at the centre of an equilateral triangle, the vertices of which correspond to the axes of the three rods forming the triple-rod set. The fibre location, therefore, is kept stable against any shrinkage of the plastic resin 83 which occurs when it stiffens in the mould 80. When the plug 85 is inserted into the connector, its surface 85a is grasped firmly in said sleeve 12c (Fig. 1). On the one hand, the shrinkage of the resin 83 cannot influence the triple-rod set geometry, but exposing the cylindrical surface of each rod along a tangential line. Thus, the substantial and active surface 85a is determined accurately by the rigid precision rods. This results, accordingly, in the accurate coincidence between the fibre and sleeve axes when the plug is grasped by the sleeve 12c (Fig. 1).

In the plug construction as mentioned above, the tangential line of the rigid rod exposed on the surface 85a has a greater hardness than other plastic member portions. This means that the plug 85 is provided with an excellent outer surface which is so hard and so resistant to wear that it withstands repetition of the mating with and detaching from the connector.

Still further, it is apparent that the present plug construction as mentioned above is effective not only for a location of the fibre 82 in the plug 85 but also for the protection and reinforcement of the optical fibre, especially its end.

Fig. 4 shows another modified embodiment of this invention. A mould 40 for the modified plug has a cross section of an equilateral triangle such as a triple-rod set of rods 86a, 86b and 86c is inscribed therein. Each rod is in tangential contact with two sides of said equilateral triangle, so that it will be exposed at two lines on its cylindrical surface when the resin shrinks. An optical fibre 43 is in tangential contact with each of the rods 86a—c in the interstice formed therebetween.

In this structure, the number of lines exposed due to resin shrinkage is doubled compared with the plug having a circular surface, the fibre location against the connector thus becoming more accurate.

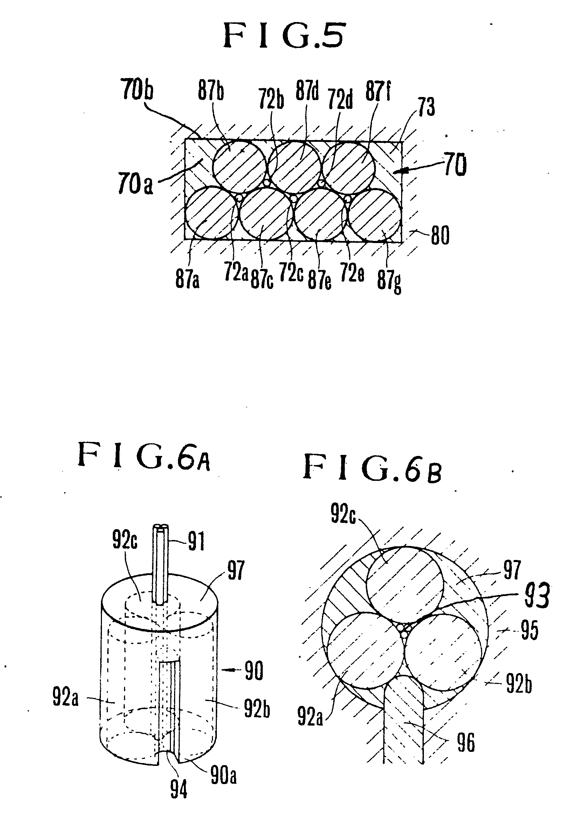

Fig. 5 shows another multifibre plug according to the invention, in which the cross section of the plug has a rectangular shape. In the figure, a plastic member 73 is moulded by using a mould 80 to form a plug 70. The plastic member contains seven rods 87a through 87g and five optical fibres 72a through 72e, which are moulded in lump therein. In the mould, the rods are arranged to come into tangential contact with each neighbour, and also with the end face 70a as well as with the side face 70b of said plastic member 70. Each one of the fibres 72a through 72e is inserted into a respective tricuspid interstice formed be three adjacent rods in trangential contact. In this example, rigid rods having an identical diameter are arranged in a single layer in parallel with an end face 70a.

Figs. 6A and 6B show still another embodiment of this invention, in which a group of optical fibres is handled as a single optical fibre. The group of the fibres, which may be three or seven or any other number of single fibres, is formed by binding a plurality of fibres together so as to make its cross section axially symmetrical. In these figures, a reference numeral 90 designates a cylindrical plug, 91 a group of optical fibres, and 92a, 92b and 92c three adjoining cylindrical rigid rods being of identical dimension. In this embodiment, three optical fibres are used to form a group of fibres. Each fibre has a very highly accurate diameter. Therefore, when a plurality of such fibres are bound together to form a group, its cross section will be of almost complete and axial symmetry. Accordingly, when a group of fibres is inserted into the tricuspid interstice formed among said three rods, it is possible to attain excellent coincidence between the axis of the fibre group 91 and the common axis of the triple-rod set. However, when two plugs as constructed above are inserted into the connector as shown in Fig. 1, their angular position about their axis has to be restricted by a limiter to achieve a precise plug alignment in the connector. A key way 94 is formed by omitting a part of the plug side surface including a part of the end face 90a. The structure as described above is attained by using a mould 95 as shown in Fig. 6B. The mould 95 is provided with a core 96 which projects from the side surface of the mould by a predetermined height and is wedged into the bottom of the mould by a predetermined depth. Three rods are arranged in the mould such that two of them (92a, 92b) come into tangential contact with said core at its sides respectively. Then, the group of the fibres 91 is inserted into the tricuspid interstice formed at the centre portion of the triple-rod set until it arrives at the bottom of the mould. The upwardly extended portion of the fibres is usually covered by a jacket (not shown). After the rods and fibres are arranged in the mould, a melting plastic resin such as epoxy is poured thereinto. When the resin hardens, the plug results having a key way at a predetermined position as shown in Fig. 6A. When a connector sleeve is provided with a guide pin corresponding to said key way, the plug angular position with respect to the sleeve is determined precisely. Thus a fine plug alignment in the sleeve is obtained.

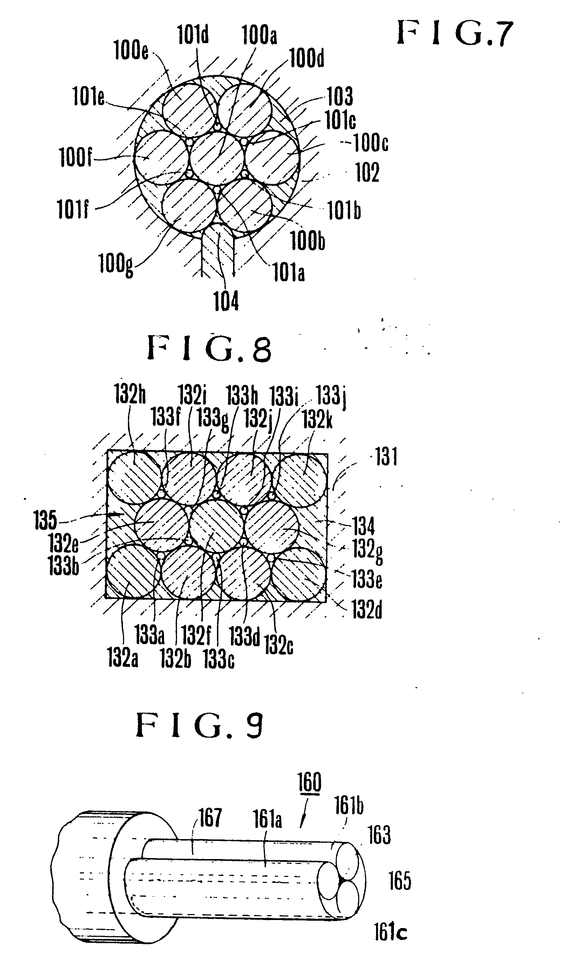

Fig. 7 shows an arrangement of rods and fibres in the mould for providing another embodiment of the present invention. There are provided seven rigid rods 100a through 100g which have identical dimensions. The rod 100a is located at the centre of the mould 102. Another six rods 100b through 100g are arranged around the centre rod 100a such that each of the rods 100b through 100g is in tangential contact with the centre rod 100a and also with two neighbouring rods at both its sides. Six fibres 101a through 101f are inserted into six interstices, respectively, which are formed at each centre portion of the triple-rod set consisting of the centre rod 100a and two adjacent rods. The fibres are extended to reach the bottom of the mould. In this arrangement, two rods, for example 100g and 100b, are brought into tangential contact with a core 104 for a key way, this core being inwardly projected in the radial direction. A melting plastic 103 is poured into the mould, thereby attaining the plug structure with a key way. With this structure, the key way always comes to take a constant position with respect to the cross sectional pattern of the fibre group. The connector sleeve for receiving the above plug with the key way is provided with a guide pin corresponding to said key way. Two plugs therefore, are mated in the sleeve keeping their accurate and constant angular position with respect to the sleeve. Thereby, sectional fibre patterns of both plugs will coincide precisely with each other. However, such arrangements may be performed without key ways as well.

Fig. 8 shows still another embodiment with a multi-fibre arrangement according to the invention. For forming the structure of this embodiment, first, 11 rigid rods (132a through 132k) are arranged in the rectangular space of a mould 131. Then, 10 optical fibres 133a through 133j are located in 10 interstices formed by said rods. The outer dimension of the resultant mould is determined accurately by the overall dimensions of the stacked precision rods, so that two plugs can be aligned completely. A plastic member 134 defines the contour of a plug 135. The rods in tangential contact with the outer surface of the plastic member are tangentially exposed thereon. In this embodiment, the location of the rods is a matter of choice.

Figs. 9 through 15 show further modified embodiments of the present invention, which can provide accurate alignment against the connector and are provided with means for limiting their axial angular position.

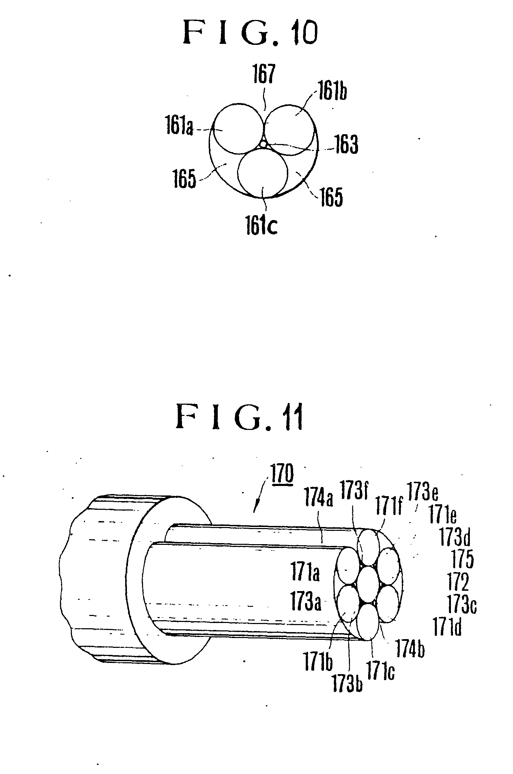

Fig. 9 shows the embodiment with a single optical fibre, which is obtained by a slight modification of the plug shown in Fig. 2. In order to produce the plug 160, first, rods 161a, 161b and 161c, all of which have an identical diameter, are arranged in the cylindrical space of the mould (not shown). Then, an optical fibre 163 is inserted into the interstice formed between the rods. The fibre and rods are in tangential contact with one another. After the above arrangement, a melting plastic is poured into the mould (not shown) to fix the entirety of the arrangement. When the plastic resin hardens, the moulded structure is removed from the mould and receives a predetermined process for finish. In this process, first the end of the plug is polished. The resultant structure becomes the same as obtained in Fig. 2. The second step is to remove the plastic resin only bridging across the two rods 161a and 161b. The portion created by this step provides a key way 167 for limiting the plug angular position around its axis. Fig. 10 is a cross sectional view of the plug as shown in Fig. 9, from which the shape of the key way 167 will be understood more clearly. According to the structure above, the outer surface of the plug 160 is in tangential contact with said rods (161a, 161b, 161c), so that the plug position in the connector sleeve is accurately determined by the rods and at the same time the relative position between the fibre and the key is also determined accurately. Further, the coincidence between the plug axis and the fibre is achieved with high accuracy. Such an excellent optical fibre location and alignment mechanism is based on the accurate process and the stable nature of the rigid rods which are made of steel, high quality hard glass, industrial ruby, sapphire, etc. For instance, the materials for use in manufacturing commercial bearings are processed with an error of less than 1 µm, so that the structure is obtained with accurate dimension when such precision basic materials are arranged closely. The plastic member 165 is used for just fixing the rod arrangement together, so that the dimensional requirement for the plastic member is not so severe. Generally, the plastic material shrinks when it hardens. Consequently, the outer surface of the plastic allows the rods to become partially exposed, and the effective outer diameter of the plug will be determined by the arrangement of the precision rods.

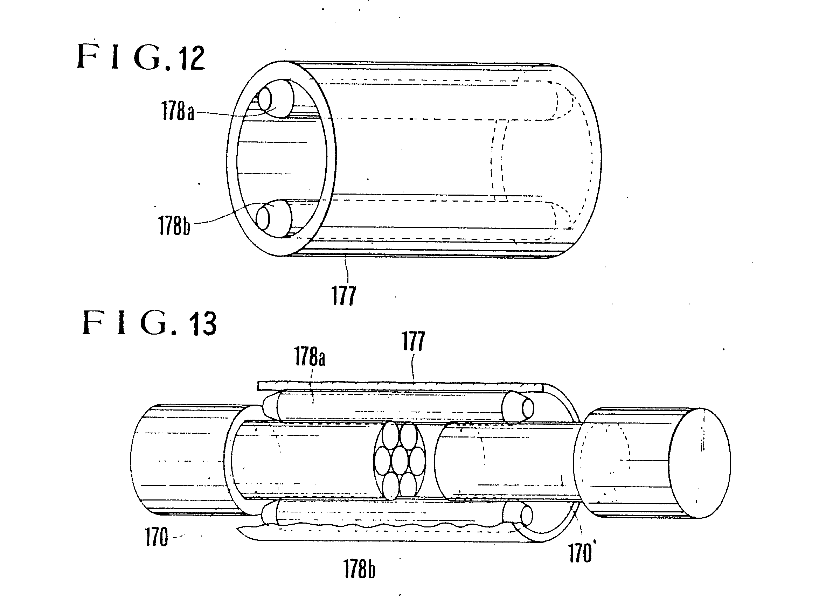

Fig. 11 shows still another embodiment of this invention. A plug 170 comprises six rods 171a through 171f in a hexagonal-packed arrangement with centrally arranged rod 172 in tangential contact with each of the six outer rods, six optical fibres 173a through 173f which are inserted into six interstices formed by said six outer rods and the central rod 172, a plastic member 175, and two key ways 174a and 174b formed at opposite sides by removing the plastic member between rods 171a and 171f and between rods 171c and 171d. The rods, as mentioned hereinbefore, are processed with an error of less than 1 μm, so that the relative position of the six fibres, especially to key ways 174a and 174b, is determined with high accuracy. Further, the rod arrangement is maintained firmly and stably by the plastic member 175.

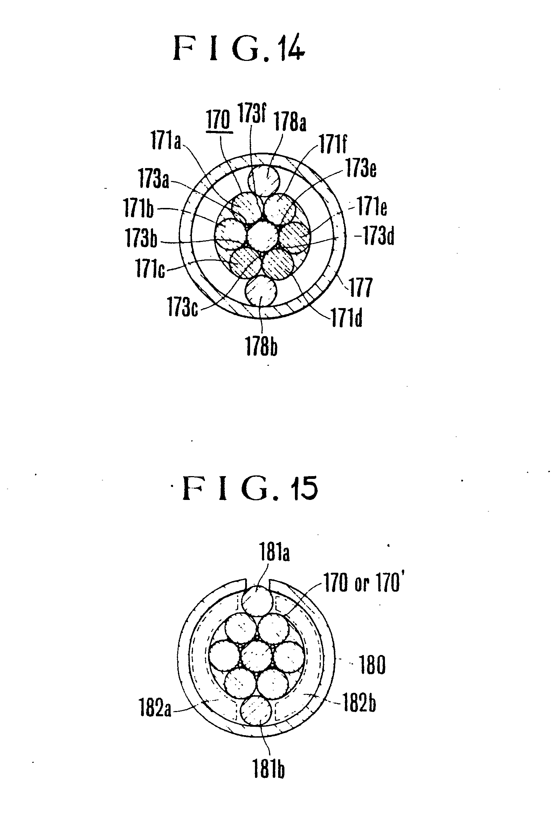

Fig. 12 shows a resilient connector sleeve 177 to receive the plug body as shown in Fig. 11. Said sleeve 177 having a circular or else-shaped cross section is provided with two guide pins 178a and 178b which are used for coupling with the key ways 174a and 174b. Fig. 13 shows the coupling state between the plug 170 (170') and the sleeve 177. Fig. 14 shows the cross section of the coupling state as shown in Fig. 13.

In the coupling as mentioned above, plugs 170, 170' are aligned accurately and at the same time, their axial angular positions are strictly set with respect to each other, so that the six optical fibres contained in each plug are aligned with accuracy when coupled. In this case, the sleeve for receiving the plugs may be formed in a rigid body having a precise dimension. However, it may be possible to use a sleeve which is made of a resilient material with lower accuracy. In other words, it is possible to use a sleeve that it deforms itself elastically in response to the insertion of the plug and holds the inserted plug by the spring action caused by its deformation. Generally such a sleeve is manufactured by an easy process at low cost, and it also allows the introduction of the plug with less resistance. For this purpose, the sleeve 177 as shown in Fig. 14 may be made of a resilient thin metal. When the plug is inserted into the sleeve 177, the circle of the sleeve cross section is expanded by force pushing guide pins 178a and 178b apart. As a result, the sleeve will take an elliptic cross section, of which the vertical axis is a little longer than the horizontal. When the sleeve is deformed, a restoration force is created between the guide pins, which force grasps the inserted plugs firmly.

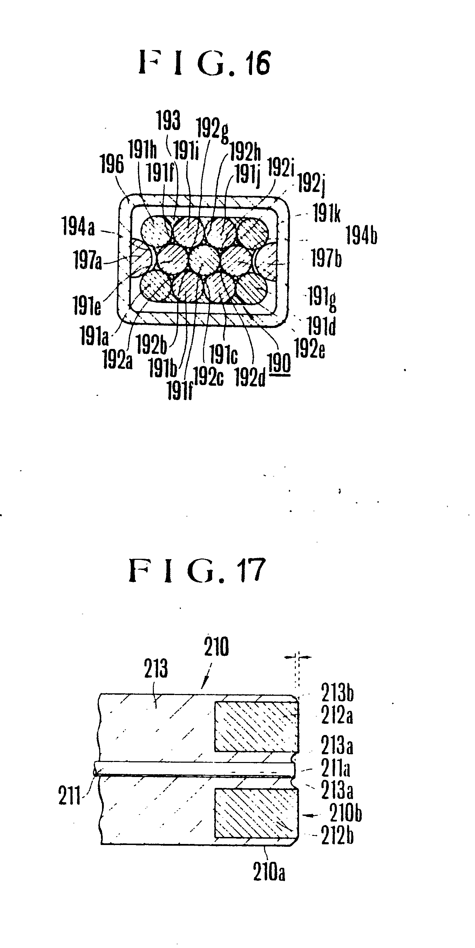

Another form of a sleeve 180 is shown in Fig. 15 by way of a slitted sleeve, which is provided with guide pins 181a and 181b along its inside surface. Spring action of the slitted sleeve will bring about the same effect as the sleeve 117 of Fig. 14. Furthermore, as shown in Fig. 15, it may be possible to insert spacers 182a and 182b into the space between the plug 170, 170' and the slitted sleeve 180.

Fig. 16 shows still another embodiment of this invention, in which ten optical fibres are located. A plug 190 comprises cylindrical rigid rods (191a through 191k) which have an identical diameter and are stacked in three layers in 4-3-4 formation so as to form a rectangular cross section; ten optical fibres 192a through 192j each of which is inserted into the interstices formed by a respective triangle triple set of the rigid rods; a plastic member 193 moulded to contain in lump the optical fibres and the rigid rods. The rods in each triangle triple set are in tangential contact with one another as well as with the optical fibre running through the tricuspid interstice formed at the centre of the set. The outer surface of the plug 190 allows the rigid rods 191a through 191d, 191e, 191g and 191h through 191k to be exposed tangentially on it. Key ways 194a and 194b are formed respectively at a space facing the rods 191a, 191e and 191h and also at another space facing the rods 191d, 191g and 191k. These key ways mate with guide pins 197a and 197b which are provided on the inside face of a rectangular sleeve 196 in the connector. With coupling two plugs 190 by means of these key ways and pins, the correct connection is achieved between the plugs and the sleeve, with the result of an accurate multifibre plug alignment.

In connectors with plugs and sleeves as shown in Figs. 9 through 16, the angular position between two plugs to be coupled is determined in one way, so that optical fibre alignment is achieved easily and accurately not only in single fibre plugs but also in multifibre plugs. Further, a mating and detaching of the plugs is extremely easy, and the repetition thereof causes no harm to the quality of the fibre connection. All this has been confirmed by experiments on connectors manufactured for trial.

Fig. 17 shows an end structure of the plug which is applicable to all-the embodiments having been described hereinbefore. A plug 210 comprises an optical fibre 211, three comparatively short rods 212a, 212b and 212c (only 212a, 212b shown) which are arranged around the fibre to be in tangential contact with it, and a plastic member 213 moulded to contain the fibre and rods in lump and to define the outer surface 210a of the plug. The three rods are in tangential contact with the surface 210a, and are tangentially exposed on it. The end of the plug is finished by using a known polishing process. As a result of this polishing process, the end 211a of the fibre 211 is more deeply polished than the ends of rods 212a, 212b and 212c by a few micrometers. The end surface (213a, 213b) of the plastic member is polished further than said fibre end. Consequently, the end of the plug is led by the hardest members, i.e. the rigid rods 212a, 212b and 212c, so that the fragile fibre faces come to oppose each other at a distance of several micrometers when two plugs are mated with each other, thus preventing the fibre faces from being broken. In this case, the distance of some micrometers between the fibers does not affect the fibre connection quality.

As will be apparent from the above description in order to obtain the end structure as shown in Fig. 17, the material of the rods must be harder than at least the material for the optical fibre. Thus, the rods in this case have to be prepared by using a corresponding material, for instance, industrial ruby, sapphire, or the like.

In the foregoing discussion, explanation has been made on the case that the rods have identical diameters, but it should be noted that it is not an essential requirement of the invention. For instance, rods having different diameters may be used with the same effect if plugs to be mated have an asymmetric arrangement of rods in opposing cross sections.

**Claims**

1. Optical fibre alignment mechanism including a plug, the front portion of which forms a plug body having an outer surface defining contact areas for engagement with sleeve or socket means receiving the plug body, an optical fibre arrangement including at least one optical fibre, and fibre alignment means comprising an arrangement only composed of rigid rods of circular cross-section, of which at least three are provided, which rods are arranged to surround the optical fibres and each of which is in tangential contact with at least one of the optical fibres as well as with two other of said rods, characterised in that said plug is a moulded plug (13a) of a pourable and stiffening plastic resin forming a plastic member defining the general contour of the plug (13a) including the plug body (18), the outer surface of which plastic member substantially encloses in lump the fibre arrangement (20) and the rigid rods, but nevertheless allows the rigid rods to be exposed to a limited extent at least at three portions on the plug body (18), at least part of these limited exposed portions defining said contact areas of the plug body.

2. The mechanism according to claim 1, characterised in that the rigid rods (76a, 76b, 76c) surround the optical fibre (77), the rigid rods (76a, 76b, 76c) being in tangential contact with the fibre (77) in a known per se manner as well with each other, and each of the rods (76a, 76b, 76c) tangentially exposed out of the side surface (75a) of the plug body (75) resp. the plastic member (78).

3. The mechanism according to claim 1, characterised in that the plastic member (73, 134, 193) contains in lump a plurality of optical fibres (72, 133, 192) and a plurality of rigid rods (87, 132, 191) surrounding each of the fibres (72, 133, 192), the rigid rods (87, 131, 191) being arranged in a plurality of axially extending layers and in tangential contact with neighbour rods, each of the fibres (72, 133, 192) running through the interstice formed by adjoining three rigid rods and being in tangential contact therewith, and each rigid rod belonging to the peripheral side layers of the rigid rods being in tangential contact with the outer surface of the plug body (70, 135, 190).

4. The mechanism according to claim 3, characterised in that the number of layers is two and all of the rigid rods (87) are in tangential contact with the outer surface (70b) of the plug body (70) resp. the plastic member (73).

5. The mechanism according to claim 3, characterised in that the number of layers is three and only a part of the rigid rods (132a—132d, 132h—132k; 191a—191d, 191h—191k) is in tangential contact with the outer surface of the plug body (135, 190) resp. the plastic member (134, 193).

6. The mechanism according to claim 1, characterised in that the plastic member (103, 142, 175) contains in lump a plurality of optical fibres (101, 141, 173) and a plurality of rigid rods (100, 139, 171—172) surrounding each of the fibres (101, 141, 173), the rigid rods (100, 139, 171—172) being arranged such that one of the rigid rods (100a, 139a, 172) is positioned at centre and the remaining rods are annularly positioned around the centre rigid rod (100a, 139a, 172), the centre rigid rod being in tangential contact with all of the surrounding rigid rods, each of which is also in tangential contact with rigid rods on both its sides, each of the fibres being surrounded by the centre rigid rod (100a, 139a, 172) and adjoining two of the annularly arranged rigid rods, and each of the annularly arranged rigid rods being in tangential contact with the outer surface of the plastic member resp. the plug body (103, 138, 170).

7. The mechanism according to any one of claims 1 to 6, characterised in that the plug body resp. the plastic member has a circular, a triangular or a rectangular cross-section.

8. The mechanism according to any one of claims 1 to 7, characterised in that the plastic member (97, 145) is provided at least at the end of its front portion with a key way (94, 150) prepared in the form of a groove to restrict the revolution about the mechanism axis, the shape of the key way (94, 150) being defined by exposed rigid rods (92a, 92b; 147a, 147b).

9. The mechanism according to claim 8, characterised in that the plastic portion across two adjacent rods (161a, 161b; 171a, 171f and 171c, 171d, 191a, 191h and 191d, 191k) is removed to form the key way (167; 174a, 174b; 194a, 194b).

10. The mechanism according to any one of claims 1 to 9, characterised in that a part of rods is exposed at the frontal end face (18a) of the plug body (18) including the fibre end.

11. The mechanism according to claim 10, characterised in that the exposed part of the rigid rods is polished.

12. The mechanism according to any one of claims 1 to 9, wherein the rigid rods (212) are in contact with the end face (210b) of the plug body (210) resp. of the plastic member (213), and are tangentially exposed on it, characterised in that the material of the rigid rods (212) is harder than at least the material of the optical fibre (211) so that after a polishing process the optical fibre end (211a) is located at the inside a little offset from the rod surface exposed at the frontal end face (210b).

13. The mechanism according to any one of claims 1 to 12, characterised in that the optical fibre consists of a group of optical fibres (93, 146), of which the external surface is in tangential contact with the rigid rods.

14. The mechanism according to any one of claims 1 to 13, characterised in that the plastic member is made of epoxy resin.

15. The mechanism according to any one of claims 1 to 14, characterised in that the rigid rods are made of a material that is selected from steel, glass, industrial ruby or sapphire.

16. A connector comprising two optical fiber alignment mechanisms as claimed in any one of claims 1 to 15, characterised by a receptacle (12) which comprises a resilient sleeve (12c) for receiving the two mechanisms (13, 14) from both of its ends respectively, a housing (12a) for containing the sleeve (12c), and means (12b) for determining the position of the sleeve (12c) in the housing (12a).

17. The connector according to claim 16, characterised in that the sleeve (12c) is provided with a slit (12cs) formed in its axial direction.

18. The connector according to claim 16 or 17, characterised in that the moulded plug (13a) of optical fibre alignment mechanisms (13, 14) further comprises a base (16) and a guide cylinder (17) which extend rearwardly from the plug body (18) of said moulded plug (13a), said optical fiber alignment mechanisms further comprising a spring (13c) for biasing the moulded plug (13a) in the connecting direction, and a housing (13b).

19. The connector according to claim 16, characterised in that the plug main body (18) is provided with a key way (167, 174) for limiting its axial revolution while the sleeve (177) is provided on its inner wall with a guide pin (178) to mate with the key way (167, 174).

20. The connector according to claim 19, characterised in that there is provided a spacer (182a, 182b) intervening between the plug main body (170) except for the guide pin portion (181a, 181b) and the inner wall of the sleeve (180).

**Patentansprüche**

1. Ausrichteinrichtung für Lichtleitfasern umfassend einen Stecker, dessen vorderer Teil einen Steckerkörper mit einer Außenfläche bildet, die Berührungsbereiche zum Angriff an den Steckerkörper aufnehmenden Hülsen- oder Buchsenmitteln bestimmt, eine Lichtleitfaseranordnung, umfassend mindestens eine Lichtleitfaser, und Faserausrichtmittel, umfassend eine Anordnung, die nur aus starren Stäben (Stangen) kreisförmigen Ausschnitts zusammengesetzt ist, von denen mindestens drei vorgesehen sind, die die Lichtleitfasern umgebend angeordnet sind und von denen jeder in tangentialer Berührung mit mindestens einer der Lichtleitfasern sowie mit zwei zweiteren der Stäbe steht, dadurch gekennzeichnet, daß der Stecker ein gegossener Stecker (13a) aus einem gießfähigen und härtbaren Kunstharz unter Bildung eines Plastikteils ist, das den allgemeinen Umriß des Steckers (13a) einschließlich des Steckerkörpers (18) bestimmt und dessen Außenfläche im wesentlichen die Faseranordnung (20) und die starren Stäbe als Ganzes umschließt, aber dennoch die starren Stäbe in begrenztem Maße an wenigstens drei Abschnitten des Steckerkörpers (18) freiliegen läßt, wobei mindestens ein Teil dieser begrenzten freiliegenden Abschnitte die Berührungsbereiche des Steckerkörpers bestimmt.

2. Einrichtung nach Anspruch 1, dadurch gekennzeichnet, daß die starren Stäbe (76a, 76b, 76c) die Lichtleitfaser (77) umgeben, wobei sich die starren Stäbe (76a, 76b, 76c) in tangentialer Berührung mit der Faser (77) in an sich bekannter Weise ebenso wie miteinander befinden und jeder der Stäbe (76a, 76b, 76c) tangential an der Seitenfläche (75a) des Steckerkörpers (75) bzw. des Plastikteils (78) tangential freiliegt.

3. Einrichtung nach Anspruch 1, dadurch gekennzeichnet, daß das Plastikteil (78, 134, 193) als Ganzes eine Mehrzahl Lichtleitfasern (72, 133, 192) und eine Mehrzahl jede der Fasern (72, 133, 192) umgebender starrer Stäbe (87, 132, 191) enthält, wobei die starren Stäbe (87, 132, 191) in einer Mehrzahl axial sich erstreckender Schichten und in tangentialer Berührung mit Nachbarstäben angeordnet sind, jede Faser (72, 133, 192) durch den von aneinandergrenzenden drei starren Stäben gebildeten Zwischenraum verläuft und mit jenen in tangentialer Berührung steht und jeder zu den peripheren Seitenschichten der starren Stäbe gehörende starre Stab in tangentialer Berührung mit der Außenfläche des Steckerkörpers (70, 135, 190) steht.

4. Einrichtung nach Anspruch 3, dadurch gekennzeichnet, daß die Zahl der Schichten zwei beträgt und sich alle starren Stäbe (87) in tangentialer Berührung mit der Außenfläche (70b) des Steckerkörpers (70) bzw. des Plastikteils (73) befinden.

5. Einrichtung nach Anspruch 3, dadurch gekennzeichnet, daß die Zahl der Schichten drei beträgt und sich nur ein Teil der starren Stangen (132a—132d, 132h—132k, 191a—191d, 191h—191k) in tangentialer Berührung mit der Außenfläche des Steckerkörpers (135, 190) bzw. des Plastikteils (134, 193) befindet.

6. Einrichtung nach Anspruch 1, dadurch gekennzeichnet, daß das Plastikteil (103, 142, 175) als Ganzes eine Mehrzahl Lichtleitfasern (101, 141, 173) und eine Mehrzahl jede der Fasern (101, 141, 173) umgebender starrer Stäbe (100, 139, 171—172) enthält, wobei die starren Stäbe (100, 139, 171—172) so angeordnet sind, daß einer der starren Stäbe (100a, 139a, 172) zentrisch positioniert ist und die verbleibenden Stäbe ringförmig um den zentrischen starren Stab (100a, 139a, 172) angeordnet sind, der zentrische starre Stab sich in tangentialer Berührung mit allen umgebenden starren Stäben befindet, von denen sich jeder ebenfalls in tangentialer Berührung mit starren Stäben an seinen beiden Seiten befindet, jede der Fasern von dem zentrischen starren Stab (100a, 139a, 172) und benachbarten zwei der ringförmig angeordneten starren Stäbe umgeben ist und jeder der ringförmig angeordneten starren Stäbe sich in tangentialer Berührung mit der Außenfläche des Plastikteils bzw. des Steckerkörpers (103, 138, 170) befindet.

7. Einrichtung nach einem der Ansprüche 1 bis 6, dadurch gekennzeichnet, daß der Steckerkörper bzw. das Plastikteil einen kreisförmigen, dreieckförmigen oder rechteckförmigen Querschnitt hat.

8. Einrichtung nach einem der Ansprüche 1 bis 7, dadurch gekennzeichnet, daß das Plastikteil (97, 145) wenigstens am Ende seines vorderen Abschnitts mit einer Keilnut (94, 150) versehen ist, die in Form einer Rille zur Begrenzung der Drehung um die Einrichtungsachse hergestellt ist, wobei die Form der Keilnut (94, 150) durch freiliegende starre Stäbe (92a, 92b; 147a, 147b) bestimmt ist.

9. Einrichtung nach Anspruch 8, dadurch gekennzeichnet, daß der Plastikabschnitt über zwei benachbarte Stäbe (161, 161b; 171a, 171f und 171c, 171d, 191a, 191h und 191d, 191k) zur Bildung der Keilnut (167; 174a, 174b; 194a, 194b) entfernt ist.

10. Einrichtung nach einem der Ansprüche 1 bis 9, dadurch gekennzeichnet, daß ein Teil der Stäbe an der das Faserende enthaltenden vorderen Endfläche (18a) des Steckerkörpers (18) freiliegt.

11. Einrichtung nach Anspruch 10, dadurch gekennzeichnet, daß das freiliegende Teil der starren Stäbe poliert ist.

12. Einrichtung nach einem der Ansprüche 1 bis 9, bei der die starren Stäbe (212) sich mit der Endfläche (210b) des Steckerkörpers (210) bzw. des Plastikteils (213) in Berührung befinden und darauf tangential freiliegen, dadurch gekennzeichnet, daß das Material der starren Stäbe (212) härter als mindestens das Material der Lichtleitfaser (211) ist, so daß nach einem Polierverfahren das Lichtleitfaserende (211a) innen ein wenig von der Staboberfläche, die an der vorderen Endfläche (210b) freiliegt, abgesetzt angeordnet ist.

13. Einrichtung nach einem der Ansprüche 1 bis 12, dadurch gekennzeichnet, daß die Lichtleitfaser aus einer Gruppe Lichtleitfasern (93, 146) besteht, deren Außenfläche sich in tangentialer Berührung mit den starren Stäben befindet.

14. Einrichtung nach einem der Ansprüche 1 bis 13, dadurch gekennzeichnet, daß das Plastikteil aus Epoxydharz hergestellt ist.

15. Einrichtung nach einem der Ansprüche 1 bis 14, dadurch gekennzeichnet, daß die starren Stäbe aus einem Material hergestellt sind, das aus (der Materialgruppe) Stahl, Glas, Industrierubin oder Saphir ausgewählt ist.

16. Verbinder umfassend zwei Lichtleitfaser-Ausrichteinrichtungen gemäß einem der Ansprüche 1 bis 15, gekennzeichnet durch eine Aufnahme (12), die eine elastische Hülse (12c) zur Aufnahme der zwei Einrichtungen (13, 14) jeweils von ihren beiden Enden her, ein Gehäuse (12a) zur Aufnahme der Hülse (12c) und Mittel (12b) zur Bestimmung der Lage der Hülse (12b) in dem Gehäuse (12a) umfaßt.

17. Verbinder nach Anspruch 16, dadurch gekennzeichnet, daß die Hülse (12c) mit einem in ihrer Axialrichtung ausgebildeten Schlitz (12cs) versehen ist.

18. Verbinder nach Anspruch 16 oder 17, dadurch gekennzeichnet, daß der gegossene Stecker (13a) der Lichtleitfaser-Ausrichteinrichtungen (13, 14) weiterhin eine Basis (16) und einen Führungszylinder (17) umfaßt, die sich von dem Steckerkörper (18) des gegossenen Steckers (13a) rückwärtig erstrecken, wobei die Lichtleitfaser-Ausrichteinrichtungen weiter eine Feder (13c) zur Beaufschlagung des gegossenen Steckers (13a) in der Verbindungsrichtung und ein Gehäuse (13b) umfassen.

19. Verbinder nach Anspruch 16, dadurch gekennzeichnet, daß der Steckerhauptkörper (18) mit einer Keilnut (167, 174) zur Begrenzung seiner axialen Drehung versehen ist, während die Hülse (177) an ihrer Innenwand mit einem Führungszapfen (178), der mit der Keilnut (167, 174) zusammenpaßt, versehen ist.

20. Verbinder nach Anspruch 19, dadurch gekennzeichnet, daß ein Abstandsteil (182a, 182b) vorgesehen ist, das zwischen dem Steckerhauptkörper (170), mit Ausnahme des Führungszapfenteils (181a, 181b), und der Innenwand der Hülse (180) liegt.

## Revendications

1. Dispositif d'alignement d'une fibre optique comprenant un capuchon, dont la partie avant forme corps du capuchon ayant une surface extérieure définissant des aires de contact pour l'engagement de moyens formant gaines ou manchons recevant le corps du capuchon, un arrangement de fibres optiques comprenant au moins une fibre optique, et des moyens d'alignement de la fibre comportant un arrangement formé uniquement de barres rigides à section circulaire, prévues au moins au nombre de trois, lesquelles barres sont disposées de façon à entourer les fibres optiques, chacune desdites barres étant en contact tangentiel tant avec l'une au moins des fibres optique qu'avec les deux autres barres, le dispositif étant caractérisé en ce que ledit capuchon est un capuchon moulé (13a) réalisé dans une résine en matière plastique de renforcement apte à être coulée et formant un élément plastique qui définit le contour général du capuchon (13a) comprenant le corps de capuchon (18), la surface extérieure de l'élément plastique renfermant solidement, en bloc, l'arrangement de fibres (20) et les barres rigides, mais permettant nèanmoins auxdites barres rigides d'être exposées sur une étendue limitée au moins à trois tranches du corps du capuchon (18), au moins une partie de ces tranches exposées d'étendue limitée définissant lesdites aires de contact du corps du capuchon.

2. Dispositif selon la revendication 1, caractérisé en ce que les barres rigides (76a, 76b et 76c) entourent la fibre optique (77), les barres rigides (76a, 76b, 76c) étant en contact tangentiel tant avec la fibre (77), comme connu en soi, que les unes avec les autres, et chacune des barres (76a, 76b, 76c) étant exposées tangentiellement en dehors de la surface latérale (75a) du corps du capuchon (75), respectivement de l'élément plastique (78).

3. Dispositif selon la revendication 1, caractérisé en ce que l'élément plastique (73, 134, 193) contient en bloc plusieurs fibres optiques (72, 133, 192) et plusieurs barres rigides (87, 132, 191) entourant chacune des fibres (72, 133, 192), les barres rigides (87, 132, 191) étant disposées dans un certain nombre de couches s'étendant axialement et en contact tangentiel avec les barres voisines, chacune des fibres (72, 133, 192) s'étendant à travers l'interstice formé par les trois barres rigides contiguës et étant en contact tangentiel entre elles, et, chaque barre rigide, appartenant aux couches latérales périphériques des barres rigides, étant en contact tangentiel avec la surface extérieure du corps du capuchon (70, 135, 190).

4. Dispositif selon la revendication 3, caractérisé en ce que le nombre de couches est de deux, et toutes les barres rigides (87) sont en contact tangentiel avec la surface extérieure (70b) du corps du capuchon (70), respectivement l'élément plastique (73).

5. Dispositif selon la revendication 3, caractérisé en ce que le nombre de couches est de trois, et seulement une partie des barres rigides (132a—132d, 132h—132k; 191a—191d, 191h—191k) est en contact tangentiel avec la surface extérieure du corps du capuchon (135, 190), respectivement l'élément plastique (134, 193).

6. Dispositif selon la revendication 1, caractérisé en ce que l'élément plastique (103, 142, 175) contient en bloc plusieurs fibres optiques (101, 141, 173) et plusieurs barres rigides (100, 139, 171, 172) entourant chacune des fibres (101, 141, 173), les barres rigides (100, 139, 171, 172), étant disposées de telle façon que chacune des barres rigides (100a, 139a, 172) est située au centre et que le reste des barres sont disposées annulairement autour de la barre rigide centrale (100a, 139a, 172), la barre rigide centrale étant en contact tangentiel avec toutes les barres rigides qui l'entourent, chacune d'elles étant aussi, et de tout côté, en contact tangentiel avec lesdites barres rigides, chacune des fibres étant entourée par la barre rigide centrale (100a, 139a, 172) et étant contiguë à deux des barres rigides disposées annulairement, et chacune desdites barres rigides disposée annulairement étant en contact tangentiel avec la surface extérieure de l'élément plastique, respectivement le corps du capuchon (103, 138, 170).

7. Dispositif selon l'une quelconque des revendications 1 à 6, caractérisé en ce que le corps du capuchon, respectivement l'élément plastique, est à section circulaire, triangulaire ou rectangulaire.

8. Dispositif selon l'une quelconque des revendications 1 à 7, caractérisé en ce que l'élément plastique (97, 145) comporte au moins, vers une extrémité de sa partie avant, une cannelure (94, 150) formée par une rainure, de façon à limiter la rotation autour de l'axe du dispositif, la forme de la cannelure (94, 150) étant définie par les barres rigides exposées (92a, 92b, 147a, 147b).

9. Dispositif selon la revendication 8, caractérisé en ce que la partie en matière plastique située de part et d'autre de deux barres adjacentes (161a, 161b; 171a, 171f et 171c, 171d, 191a, 191h et 191d, 191k) est enlevée pour former la cannelure (167; 174a, 174b; 194a, 194b).

10. Dispositif selon l'une quelconque des revendications 1 à 9 caractérisé en ce qu'une partie des barres est exposée vers la face d'extrémité frontale (18a) du corps du capuchon (18) comprenant l'extrémité de la fibre.

11. Dispositif selon la revendication 10, caractérisé en ce que la partie exposée des barres rigides est polie.

12. Dispositif selon l'une quelconque des revendications 1 à 9, dans lequel les barres rigides (212) sont en contact avec la face d'extrémité (210b) du corps du capuchon (210), respectivement de l'élément plastique (213), et sont exposées tangentiellement sur celui-ci; ledit dispositif étant caractérisé en ce que la matière dans laquelle sont réalisées les barres rigides (212) est plus dure qu'au moins celle de la fibre optique (211) de façon qu'après le processus de polissage, l'extrémité de la fibre optique (211a) soit logée à l'intérieur d'un léger retrait formé dans la surface de la barre exposée vers sa face d'extrémité frontale (210b).

13. Dispositif selon l'une quelconque des revendications 1 à 12, caractérisé en ce que la fibre optique consiste en un groupement de fibres optiques (93, 146) dont la surface externe est en contact tangentiel avec les barres rigides.

14. Dispositif selon l'une quelconque des revendications 1 à 13, caractérisé en ce que l'élément plastique est fabriqué en résine époxy.

15. Dispositif selon l'une quelconque des revendications 1 à 14, caractérisé en ce que les barres rigides sont réalisées dans une matière sélectionnée à partir de l'acier, du verre, du rubis industriel ou du saphir.

16. Connecteur comprenant deux dispositifs d'alignement de fibre optique, tel que revendiqué dans l'une quelconque des revendications 1 à 15, caractérisé par une fiche (12) qui comprend un manchon élastique (12c) pour recevoir deux dispositifs (13, 14), respectivement à chacune de ses extrémités, un logement (12a) pour contenir le manchon (12c), et des moyens (12b) pour définir la position du manchon (12c) dans le logement (12a).

17. Connecteur selon la revendication 16, caractérisé en ce que le manchon (12c) est pourvu d'une fente (12cs) formée dans sa direction axiale.

18. Connecteur selon la revendication 16 ou la revendication 17, caractérisé en ce que le capuchon moulé (13a) du dispositif d'alignement de fibre optique (13, 14) comprend, en outre, une base (16) et un cylindre de guidage (17) qui s'étendent vers l'arrière du corps du capuchon (18) dudit capuchon moulé (13a), ledit dispositif d'alignement de fibre optique comprenant, en outre, un ressort (13c) pour solliciter le capuchon moulé (13a) dans la direction de connection, et un logement (13b).

19. Connecteur selon la revendication 16, caractérisé en ce que le corps principal du capuchon (18) est pourvu d'une cannelure (167, 174), de façon à limiter sa révolution axiale, tandis que le manchon (177) est pourvu sur sa paroi interne d'une clavette de guidage (178), de façon à l'assembler avec la cannelure (167, 174).

20. Connecteur selon la revendication 19, caractérisé en ce qu'il est pourvu d'un moyen d'espacement (182a, 182b) intermédiaire entre le corps principal du capuchon (170), à l'exception de la partie formant clavette de guidage (181a, 181b), et de la paroi interne du manchon (180).

# FIG.1

# F I G.2

# F I G.3A

# F I G.3ʙ

83

82

80

80a

81c

81a    81b

# F I G.3c

81c  81cc    82

85a

81a

81b

85

81aa    85b    81bb

# F I G.4

86c    43

42a

86a

40

86b

# F I G.5

# F I G.6A

# F I G.6B

# F I G. 7

# F I G. 8

# F I G. 9

# F I G. 10

# F I G. 11

## F I G. 12

178a

178b

177

## F I G. 13

178a

177

170

170'

178b

# F I G. 14

171a
173a
171b
173b
171c
173c
170 173f 178a
171f
173e
171e
173d
177
171d
178b

# ·F I G. 15

181a
170 or 170'
180
182a
182b
181b

# F I G. 16

# F I G. 17